# DEMANDE DE BREVET EUROPEEN

(11) **EP 3 305 730 A1**
(43) Date de publication de la demande: **11.04.2018**
(21) Numéro de dépôt: 17306353.8
(22) Date de dépôt: 06.10.2017
(51) Int. Cl.: C02F 1/48, C02F 101/20

(54) **DISPOSITIF DE CAPTATION DE BOUES FERRIQUES COMPORTANT UN SYSTEME MAGNETIQUE DE PURGE**

(30) Priorité: 07.10.2016 FR 1659726
(71) Demandeur: TEMIQ, 69670 Vaugneray (FR)
(72) Inventeur: LEVOIR, Tanguy, 69005 LYON (FR)
(74) Mandataire: Jacobacci Coralis Harle

(57) **Abrégé**

Dispositif de captation (100) de boues ferriques comportant un système magnétique de purge générant un champ d'aimantation contrôlé au niveau d'au moins un aimant permanent (148), de manière à pouvoir diminuer la valeur du champ magnétique dudit aimant permanent, afin de faciliter la purge des particules ferriques capté par l'aimant.

## Description

La présente invention concerne le domaine technique des filtres ou systèmes utilisés pour assurer la captation des boues ferriques dans les installations hydrauliques, notamment dans les installations de chauffage.

Il est connu de la demande FR3027893 l'utilisation d'une chambre de captation raccordée en série à une installation de chauffage, pour filtrer les particules ferriques transportées par le fluide s'écoulant dans l'installation. Plus précisément, la chambre de captation est délimitée par une paroi périphérique formant un tube, dont les extrémités sont obturées par une plaque inférieure et une plaque supérieure. Des entrées latérales sont ménagées dans la plaque inférieure pour raccorder la chambre à une conduite principale destinée à être raccordée en série à l'installation hydraulique. De manière à permettre la circulation du fluide à traiter dans la chambre de captation, cette dernière est également raccordée à la conduite principale par un tube secondaire qui s'étend en partie dans la conduite principale. Le tube secondaire présente une extrémité distale située dans la conduite principale et une extrémité proximale située dans la chambre de captation. Plusieurs aimants permanents sont maintenus contre la paroi externe de la chambre de captation. Ainsi, au fur et à mesure du passage du fluide dans la chambre de captation, les particules ferriques contenues dans le fluide sont retenues dans une zone de captation située au niveau des aimants permanents.

Pour procéder à un nettoyage de la zone de captation et une évacuation des particules ferriques accumulées, une vanne de purge raccordée à la plaque supérieure est ouverte de manière à provoquer un écoulement turbulent rapide dans la zone de captation. Cet écoulement turbulent provoque un effet de chasse qui emporte les particules ferriques présentes dans la zone de captation et les évacue de la chambre par la vanne de purge.

Afin d'assurer, lors de la purge, une vitesse d'écoulement du fluide suffisamment élevée dans la zone de captation pour entraîner les boues ferriques captées, la plus petite section du circuit de purge doit être inférieure à un certain pourcentage de la section de passage nominale de la conduite principale. Ainsi, ce dispositif a pour inconvénient de nécessiter un agencement particulier de la chambre de captation pour assurer une évacuation optimale des particules ferriques retenues par les aimants permanents. Selon un autre inconvénient, le fluide s'écoulant dans l'installation de chauffage doit avoir une pression minimale pour permettre un effet de chasse efficace. De ce fait, ce dispositif de captation ne peut être utilisé que pour des installations collectives de faible pression.

La présente invention vise donc à proposer une chambre de captation plus simple de réalisation et permettant une purge plus efficace de la zone de captation.

Afin d'atteindre cet objectif, l'invention propose un dispositif de captation de boues ferriques comportant un système magnétique de purge. Le dispositif de captation comprend une conduite principale destinée à être raccordée en série à un circuit hydraulique, dans lequel est susceptible de circuler un fluide comportant des particules ferriques. Le dispositif de captation comporte une chambre de captation délimitée par une paroi supérieure en vis-à-vis d'une paroi inférieure, lesdites parois étant reliées par l'intermédiaire d'une paroi latérale. De préférence, la chambre de captation est de forme cylindrique. La chambre de captation est raccordée à la conduite principale par l'intermédiaire de plusieurs conduites d'entrée, chaque conduite d'entrée comprenant une première extrémité raccordée à la conduite principale et une seconde extrémité débouchant dans une zone supérieure de la chambre de captation. La zone supérieure est délimitée par la paroi supérieure de la chambre de captation. Les conduites d'entrée sont agencées de manière à permettre le remplissage de la zone supérieure par un fluide circulant dans la conduite principale. Au moins une conduite de sortie est raccordée à la zone supérieure. Pour cela, une première extrémité d'une conduite de sortie débouche dans la zone supérieure et une seconde extrémité de ladite conduite débouche dans la conduite principale, de manière à permettre l'évacuation dans la conduite principale d'un fluide présent dans la zone supérieure de la chambre de captation. Le dispositif de captation comprend au moins un aimant permanent situé au niveau d'une conduite d'entrée, afin que l'aimant permanent puisse retenir dans ladite conduite une partie des particules ferriques contenues dans le fluide principal circulant dans la conduite d'entrée. Afin de permettre une captation optimale des particules ferrique, un aimant permanent est associé à chaque conduite d'entrée. De préférence, chaque aimant permanent est agencé de sorte que sa direction de polarisation soit radiale ou sensiblement radiale à la paroi d'une conduite d'entrée. Cette caractéristique permet d'obtenir une meilleure répartition des lignes de champ dans la conduite d'entrée de manière à assurer une captation plus efficace.

L'invention se caractérise en ce que le dispositif de captation comprend un système magnétique de purge générant un champ d'aimantation contrôlé au niveau d'au moins un aimant permanent, de manière à pouvoir diminuer la valeur du champ magnétique dudit aimant permanent.

En d'autres termes, le système magnétique de purge selon l'invention permet de réduire ou annuler l'intensité du champ magnétique généré par un ou plusieurs aimants permanents, lors de la purge de la chambre de captation, de manière à faciliter l'évacuation des particules ferriques piégées dans les conduites d'entrée. De ce fait, il n'est plus nécessaire que la chambre de captation présente une section de passage particulière pour créer un écoulement turbulent rapide. Ainsi, de façon avantageuse, l'invention permet une plus grande liberté de conception de la chambre de captation, notamment une simplification de l'agencement de ces différents éléments, ce qui se traduit par un coût de fabrication moins élevé.

Selon un autre avantage, le système magnétique de purge peut annuler la valeur du champ magnétique généré par chaque aimant permanent, de sorte à faciliter l'évacuation des particules ferriques présentes dans les conduites d'entrée. Ainsi, l'invention permet une purge efficace de la chambre de captation même lorsque la pression du circuit de chauffage est faible dans les conduites d'entrée. De ce fait, un dispositif de captation selon l'invention peut être utilisé sur un plus grand nombre d'installations hydrauliques, notamment sur des installations de chauffage équipant des bâtiments de faible hauteur, ce qui était moins efficace avec le dispositif de captation décrit ci-dessus.

Selon une autre caractéristique de l'invention, le système magnétique de purge comporte au moins une bobine comprenant un enroulement de fil conducteur autour d'un axe, l'axe de chaque bobine étant aligné ou sensiblement aligné avec la direction de polarisation d'un aimant permanent distinct. Ainsi, le système magnétique de purge peut faire varier plus efficacement la valeur du champ magnétique généré par un ou plusieurs aimants permanents, de façon synchronisée ou non.

Selon une variante de cette caractéristique, une ou plusieurs bobines entourent au moins partiellement un aimant permanent. De préférence, au moins un aimant permanent sert de support pour l'enroulement du fil conducteur.

Selon une autre caractéristique de l'invention, au moins un aimant permanent est présent à proximité d'une conduite d'entrée. De préférence, l'aimant permanent est contact avec une partie de la paroi interne d'une conduite d'entrée.

Selon une caractéristique de cette forme de réalisation, au moins un aimant permanent occupe plus de 60% du volume intérieur de la conduite d'entrée, de préférence plus de 80%.

Selon une autre caractéristique de cette forme de réalisation, au moins un aimant permanent s'étend sur plus de 60% de la longueur de la conduite d'entrée, de préférence de plus de 80%.

Selon une autre caractéristique de l'invention, le système magnétique de purge comprend une source de courant alimentant chaque bobine et un module de commande contrôlant la source de courant, de sorte que chaque bobine génère un champ magnétique de sens opposé à l'aimant permanent qui lui est associé.

Selon une autre caractéristique de l'invention, le dispositif de captation comporte une conduite de purge comprenant une première extrémité débouchant dans la zone supérieure de la chambre de captation et une seconde extrémité débouchant à l'extérieur du dispositif de captation. La conduite de purge comprend une vanne motorisée de manière à permettre la purge de la zone supérieure de la chambre de captation, la position de la vanne motorisée étant contrôlée par le module de commande.

Selon une variante de cette caractéristique de l'invention, chaque conduite d'entrée comprend des moyens de détection de la quantité de boues ferriques accumulées dans la conduite, les moyens de détection étant connectés au module de commande.

Selon une variante de cette caractéristique de l'invention, les moyens de détection comprennent un capteur de champ magnétique situé à proximité ou dans la conduite d'entrée, le capteur étant adapté pour mesurer la variation de l'intensité du champ magnétique dans la conduite.

Selon une autre caractéristique de l'invention, les conduites d'entrées sont au moins partiellement présentes dans la chambre de captation.

Selon une autre caractéristique de l'invention, le dispositif de captation comprend au moins quatre conduites d'entrée, de préférence au moins 8.

Selon une variante de cette caractéristique de l'invention, les conduites d'entrées entourent la conduite de sortie. De préférence, la conduite de sortie passe par le centre de la chambre de captation et les conduites d'entrée entourent de façon régulière la conduite de sortie.

Selon une variante de réalisation préférée, les conduites d'entrée et/ou la conduite de sortie sont parallèles ou sensiblement parallèles à la paroi latérale de la chambre de captation. De préférence, la paroi latérale forme un tube.

Selon une caractéristique de l'invention, les conduites d'entrée et la conduite de sortie sont adaptées pour ne prélever qu'une partie du flux principal circulant dans la conduite principale.

Selon une autre caractéristique de l'invention, la section totale des conduites d'entrée est inférieure à la section de la conduite principale et la section de la conduite de sortie est inférieure ou égale à la section de la conduite principale. Cette caractéristique de l'invention permet de s'assurer que la vitesse d'écoulement du fluide à traiter dans la chambre de captation est inférieure à la vitesse d'écoulement du fluide dans la conduite principale de manière que la vitesse d'écoulement dans les conduites d'entrée soit compatible avec une captation des particules ferriques par les aimants permanents.

Selon une caractéristique de l'invention, la seconde extrémité de la conduite de sortie est coudée de manière que la section de passage de son extrémité forme un angle aigu non nul avec l'axe médian de la conduite principale. Une telle caractéristique permet de favoriser la circulation du fluide dans la chambre de captation latérale.

Selon une autre caractéristique de l'invention, la conduite d'entrée comporte également un clapet anti-retour afin d'empêcher l'introduction d'un fluide dans la chambre annulaire par ladite conduite.

Selon une variante de cette caractéristique, la section de passage de la conduite de sortie est orientée à l'opposé du sens flux principal. Cette variante permet d'engendrer un phénomène de venturi au niveau de la seconde extrémité du tube secondaire, favorisant ainsi une aspiration du fluide à nettoyer au niveau des premières extrémités des conduites d'entrée lorsque le circuit de purge est fermé.

La présente invention concerne également un procédé de purge d'un dispositif de captation décrit ci-dessus dans lequel, lorsque les moyens de détection détectent dans une conduite d'entrée une quantité de boues ferriques accumulées dépassant un seuil prédéterminé, le module de commande :
actionne la source de courant alimentant la bobine présente au niveau de la conduite d'entrée avec un courant apte à diminuer, de préférence à annuler, le champ magnétique généré par l'aimant permanent présent au niveau de ladite conduite ; puis
ouvre la vanne motorisée.

Selon une variante de réalisation, la bobine peut être alimentée avant, après ou bien en même temps que l'ouverture de la vanne de purge. De préférence, la bobine est alimentée après l'ouverture de la vanne de purge afin d'éviter que des particules ferriques passent par la conduite de sortie.

Bien entendu, les caractéristiques, différentes variantes et formes de réalisation de l'invention peuvent être associées les unes aux autres selon diverses combinaisons, dans la mesure où elles ne sont pas incompatibles ou exclusives les unes des autres.

Les caractéristiques de l'invention mentionnées ci-dessus, ainsi que d'autres, apparaîtront plus clairement à la lecture de la description suivante des exemples de réalisation ci-dessous, en se référant aux dessins annexés sur lesquels :
la figure 1 est une vue partielle schématique d'un circuit hydraulique équipé d'un dispositif de captation selon l'invention ;
la figure 2 est une coupe axiale schématique du dispositif de captation illustré à la figure 1 ;
la figure 3 est une coupe transversale schématique du dispositif de captation illustré aux figures 1 et 2.

Il est à noter que sur ces figures les éléments structurels et/ou fonctionnels communs aux différentes variantes peuvent présenter les mêmes références.

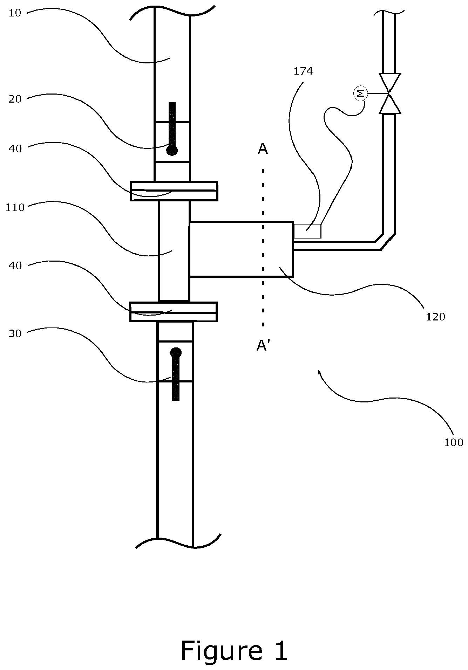

Comme le montre la figure 1, un exemple de dispositif de captation de boues ferriques selon l'invention, désigné dans son ensemble par la référence 100, est destiné à venir s'insérer dans un circuit hydraulique 10 tel que, par exemple, un circuit de circulation d'eau de chauffage d'un bâtiment individuel ou collectif. Le dispositif de captation 100 est, par exemple, monté entre deux vannes quart de tour 20, 30 et adapté pour assurer la continuité du circuit hydraulique 10.

À cet effet, le dispositif de captation 100 comprend, comme le montrent les figures 1 à 3, une conduite principale 110 destinée à être montée en série sur le circuit hydraulique 10 au moyen de deux brides 40 qui autorisent un démontage facile du dispositif de captation 100. Bien entendu, le dispositif de captation selon l'invention pourrait être intégré par tout autre moyen dans le circuit hydraulique 10.

Afin de permettre une captation des particules de fer contenues dans le fluide s'écoulant dans le circuit 10, l'invention propose de détourner une partie seulement du flux en direction d'une chambre de captation 120 de manière à y capter au moins une partie des particules ferriques au moyen d'un champ magnétique.

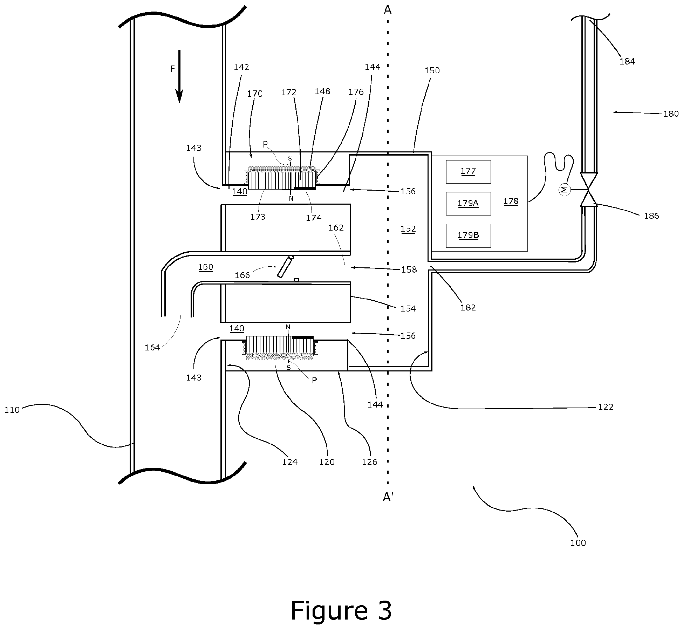

Ainsi, comme représenté à la figure 3, le dispositif de captation 100, comprend une chambre de captation 120 délimitée par une paroi supérieure 122 et une paroi inférieure 124, toutes deux en vis-à-vis. Les parois supérieure et inférieure sont reliées par une paroi latérale 126. Les parois délimitent une chambre de captation close et de forme tubulaire. La chambre de captation est raccordée à la conduite principale 110 par l'intermédiaire de conduites d'entrée 140. Par le terme « raccordé », on entend la connexion fluidique entre deux éléments de manière à permettre l'écoulement d'un fluide d'un élément à l'autre. Plus précisément, chaque conduite d'entrée 140 comprend une première extrémité 142 fixée à la paroi inférieure 124 de sorte à être en vis-à-vis d'un passage 143 ménagé à travers la paroi inférieure 124 et la paroi de la conduite principale 110. Les conduites d'entrée s'étendent dans une partie de la chambre de captation 120, jusqu'à ce que leur seconde extrémité 144 débouche dans une chambre annulaire 150, délimitant une zone supérieure 152. La chambre annulaire 150 est délimitée par la paroi supérieure 122 et une partie de la paroi latérale 126 de la chambre de captation. La chambre annulaire comprend également un fond 154 parallèle ou sensiblement parallèle à la paroi supérieure 122 et délimité par la paroi latérale 126. Bien entendu, le fond 154 comprend des premiers passages 156 permettant de raccorder les secondes extrémités 144 de chaque conduite d'entrée à la chambre annulaire 150, de manière à permettre le remplissage de la zone supérieure 152 par un fluide circulant dans la conduite principale 110.

La chambre annulaire 150 comprend également un second passage 158 traversant son fond 154 afin de permettre l'évacuation du fluide présent dans la chambre annulaire. Pour cela, une conduite de sortie 160 est raccordée à la chambre annulaire 150 par l'intermédiaire d'une première extrémité 162 et sa seconde extrémité 164 passe à travers la paroi inférieure 124 et la paroi de la conduite principale 110 de manière à déboucher dans ladite conduite. De façon avantageuse, la conduite de sortie est coudée au niveau de sa seconde extrémité 164 de sorte que la section de passage de son extrémité forme un angle aigu non nul avec l'axe médian de la conduite principale. Selon le présent exemple, la valeur de cet angle est de l'ordre de 90°. La section de passage de l'extrémité distale est ici orientée à l'opposé du sens flux principal tel qu'indiqué par la flèche F sur la figure 3. La configuration coudée du tube secondaire ainsi que l'orientation de son extrémité distale induisent de façon avantageuse un effet Venturi favorable à la circulation d'un fluide dans la chambre de captation 120. Il est à noter que la conduite de sortie comporte également un clapet anti-retour 166 afin d'empêcher l'introduction d'un fluide dans la chambre annulaire par ladite conduite lors de l'effet de chasse.

Les conduites d'entrée 140, la chambre annulaire 150 et la conduite de sortie 160 forment ainsi une boucle de dérivation dans laquelle s'écoule une partie du fluide circulant dans la conduite principale.

Afin de favoriser la circulation du fluide à traiter dans la boucle de dérivation, les premières extrémités 142 des conduites d'entrée 140 sont situées à distance de la seconde extrémité 164 de la conduite de sortie 160. Selon le présent exemple, le dispositif de captation 100 comprend huit conduites d'entrée 140 entourant de façon régulière la conduite de sortie 160. Bien entendu, ce nombre n'est pas limitatif de sorte que l'invention peut comprendre un nombre plus important de conduites d'entrée afin de filtrer une plus grande quantité de particules ferriques comme expliqué ci-dessous. À titre d'exemple, le nombre de conduites d'entrée peut être compris entre deux et seize, de préférence entre quatre et huit.

Pour que les vitesses d'écoulement dans la chambre de captation ne soient pas trop importantes de favoriser une meilleure captation des particules ferriques, la somme de sections des conduites d'entrées 140 est de préférence inférieure ou égale à 15% de la section de passage nominale de la conduite principale 110 mesurée en amont du raccordement avec la chambre de captation. De manière plus particulièrement préférée, la somme des sections des conduites d'entrées 140 est inférieure ou égale à 12% de la section de passage nominale de la conduite principale. De même, la section de passage de la seconde extrémité de la conduite de sortie 160 est de préférence inférieure ou égale à 15% à la section de passage nominale de la conduite principale 110 telle que mesurée en amont du raccordement avec la chambre de captation. De manière plus particulièrement préférée, la section de passage de la seconde extrémité de la conduite de sortie est inférieure ou égale à 12% de la section de passage nominale de la conduite principale. Ainsi, la vitesse du fluide dans la chambre de captation est inférieure à la vitesse du fluide dans la conduite principale.

Afin d'éviter des risques d'obturation de la chambre de captation 120, les premières extrémités 142 des conduites d'entrée et la seconde extrémité 164 de la conduite de sortie sont, de préférence, adaptées pour ne pas laisser passer des particules de dimension supérieure à 2 mm. A cet effet, les extrémités desdites conduites peuvent être adaptées pour bloquer les particules de taille supérieure. Il peut également être mis en oeuvre un tamis au niveau de leur ouverture.

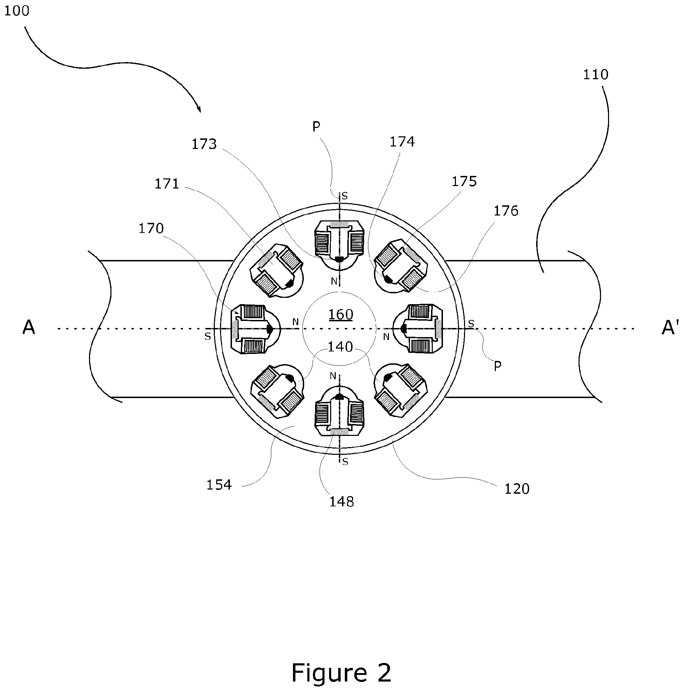

Chaque conduite d'entrée 140 est partiellement occupée sur une partie de sa longueur par un dispositif d'aimantation 170. Plus précisément comme représenté à la figure 2, chaque dispositif d'aimantation est agencé dans une conduite d'entrée 140 de manière à réduire localement sa section. Le dispositif d'aimantation comprend un support 171 composé d'un empilement de plaque 172 de fer doux tel que représenté à la figure 3. En particulier, le support 171 comprend au niveau d'une face avant 173 un logement dans lequel est présent un capteur magnétique 174, par exemple du type capteur à effet Hall.

La face avant 173 du support est destinée à être en contact avec le fluide s'écoulant dans la conduite d'entrée 140. Une face arrière 175 du support comprend également un logement dans lequel est partiellement inséré un aimant permanent 148. Selon le présent exemple, l'aimant permanent est un aimant fabriqué à base de néodyme. L'aimant permanent est agencé et maintenu sur la face arrière 175 du support de manière à ce que les lignes de champ magnétique qu'il génère passent à travers le support 171 et que l'axe de polarisation P soit orienté radialement par rapport à l'axe longitudinal de la conduite d'entrée 140. De préférence, le sens de polarisation de chaque aimant permanent 148 est dans le même sens entre les conduites d'entrée adjacentes, afin d'obtenir une bonne répartition de l'intensité du champ magnétique dans la chambre de captation 110.

Chaque support 171 est entouré au niveau de ses faces latérales par une bobine 176 de fil conducteur. Plus précisément, l'axe de chaque bobine est aligné avec la direction de polarisation de l'aimant permanent en contact avec la face arrière 175 du support 171.

Dans chaque conduite d'entrée 140, les dispositifs d'aimantation 170 sont agencés de sorte à laisser un passage délimité par leur face avant 173, dans lequel s'écoule un fluide à traiter. Autrement dit, les bobines électriques 176 et les aimants permanents 148 ne sont pas destinés à être en contact avec un fluide s'écoulant dans les conduites d'entrée. Éventuellement, une résine étanche peut être appliquée au niveau de la face avant 173 des dispositifs d'aimantation 170 pour empêcher l'écoulement d'un fluide au niveau de leur face arrière et le long de leurs parois latérales. De préférence, chaque dispositif d'aimantation 170 est enrobé d'une résine étanche au liquide circulant dans les conduites d'entrée 140.

Les dimensions des dispositifs d'aimantation sont choisies selon un compromis entre la génération d'un champ magnétique suffisant pour capter les particules ferriques, l'encombrement de la conduite d'entrée et la vitesse du fluide s'écoulant dans ladite conduite.

Au fur et à mesure du passage du fluide à traiter dans les conduites d'entrée, le champ magnétique généré par les aimants permet d'agglomérer les particules ferriques dans les conduites d'entrée 140. Ainsi, le fluide sortant comporte nettement moins de particules ferriques que le fluide entrant dans le dispositif de captation 100.

Néanmoins, au bout d'un certain temps, il s'avère nécessaire de purger les conduites d'entrée 140 afin d'éviter leur obstruction complète par les boues ferriques qui s'accumulent au niveau des faces avant 173 des dispositifs d'aimantation et sur les parois internes des conduites d'entrée. Pour cela, chaque dispositif de captation comprend un système magnétique de purge tel que représenté à la figure 3, comprenant les bobines 176, une source de courant 177 alimentant lesdites bobines et un module de commande 178 contrôlant ladite source de courant. Ainsi, le module de commande 178 contrôle l'alimentation électrique des bobines 176 de sorte que les bobines puissent générer régulièrement, un champ magnétique de polarisation inversé à celui généré par les aimants permanents 148. De façon avantageuse, les dispositifs d'aimantation comportent des capteurs magnétiques 174 permettant au module de commande 178 de mesurer la variation de l'intensité du champ magnétique au fur et à mesure de l'accumulation des particules ferriques au niveau de chaque dispositif d'aimantation 170. En effet, les particules ferriques accumulées dans une conduite d'entrée 140 contribuent à former un circuit magnétique qui referment les lignes de champ, l'intensité du champ magnétique augmente alors de façon proportionnelle à la quantité des particules ferriques accumulées.

Le module de commande 178 comprend aussi une unité de calcul 179A apte à mesurer en temps réel la variation d'intensité du champ magnétique à partir des mesures effectuées par les capteurs magnétiques 174. Le module de commande comprend également une unité de mémorisation 179B dans laquelle est enregistrée au moins une valeur seuil, correspondant à une certaine accumulation au-delà de laquelle l'évacuation des particules dans les conduites d'entrée pourrait être délicate. Ainsi, de façon avantageuse, l'invention permet de limiter le nombre de chasse afin de préserver le volume de fluide s'écoulant dans le circuit hydraulique 10.

Le système magnétique de purge comprend également une conduite de purge 180, comprenant une première extrémité 182 débouchant dans la chambre annulaire au niveau de la paroi supérieure 122 de la chambre de captation. La conduite de purge comprend une seconde extrémité 184 débouchant à l'extérieur du dispositif de captation 100. Plus précisément, la vanne motorisée 186 est connectée au module de commande 174 afin que celui-ci puisse contrôler le temps d'ouverture de la vanne pour limiter la quantité de fluide évacué du circuit par l'intermédiaire de ladite vanne.

La présente demande concerne également un procédé de purge du dispositif de captation décrit ci-dessus. Pour cela, l'unité de mémorisation intègre un programme informatique, mise en oeuvre par l'unité de calcul 179A, comprenant les étapes suivantes :
- mesurer en temps réel la valeur de l'intensité du champ magnétique dans chaque conduite d'entrée 140, par l'intermédiaire des capteurs magnétiques 174 ;
- déclencher l'ouverture de la vanne motorisée 186 lorsqu'au moins une de ces valeurs mesurées dépasse une valeur seuil préenregistrée dans l'unité de mémorisation 179B ;
- mise sous tension des bobines 176 par la source de courant 177, de sorte à atténuer voire annuler, le champ magnétique généré par chaque aimant permanent 148 ;
- fermer la vanne motorisée 186.

Bien entendu, diverses autres modifications au dispositif de captation de boues ferriques décrit ci-dessus peuvent être envisagées dans le cadre des revendications annexées.

## Revendications

1. Dispositif de captation (100) de boues ferriques comportant un système magnétique de purge comprenant :
- une conduite principale (110) destinée à être raccordée en série à un circuit hydraulique (10), dans lequel est susceptible de circuler un fluide comportant des particules ferriques ;
- une chambre de captation (120) délimitée par une paroi supérieure (122) en vis-à-vis d'une paroi inférieure (124), lesdites parois étant reliées par l'intermédiaire d'une paroi latérale (126) ;
- plusieurs conduites d'entrée (140), chaque conduite d'entrée comprenant une première extrémité (142) raccordée à la conduite principale (110) et une seconde extrémité (142) débouchant dans une zone supérieure (152) de la chambre de captation (120), délimitée par sa paroi supérieure (122), de manière à permettre le remplissage de la zone supérieure (152) par un fluide circulant dans la conduite principale (110) ;
- au moins une conduite de sortie (160) comprenant une première extrémité (162) débouchant dans la zone supérieure (152) de la chambre de captation et une seconde extrémité (164) débouchant dans la conduite principale (110), de manière à permettre l'évacuation dans la conduite principale (110) d'un fluide présent dans la zone supérieure (152) de la chambre de captation ;
- au moins un aimant permanent (148) situé au niveau d'une conduite d'entrée (140), afin que l'aimant permanent puisse retenir dans ladite conduite une partie des particules ferriques contenues dans le fluide principal circulant dans la conduite d'entrée (140) ;
**caractérisé en ce que**, le dispositif de captation (100) comprend un système magnétique de purge générant un champ d'aimantation contrôlé au niveau d'au moins un aimant permanent (148), de manière à pouvoir diminuer la valeur du champ magnétique dudit aimant permanent.

2. Dispositif selon la revendication précédente, **caractérisé en ce que** le système magnétique de purge comporte au moins une bobine (176) comprenant un enroulement de fil conducteur autour d'un axe, l'axe de chaque bobine étant aligné ou sensiblement aligné avec la direction de polarisation d'un aimant permanent (148) distinct.

3. Dispositif selon la revendication 1 ou 2, **caractérisé en ce qu'**au moins un aimant permanent (148) est présent à proximité d'une conduite d'entrée (140).

4. Dispositif selon la revendication précédente, **caractérisé en ce qu'**au moins un aimant permanent (148) occupe plus de 60% du volume intérieur de la conduite d'entrée (140), de préférence plus de 80%.

5. Dispositif selon la revendication précédente, **caractérisé en ce qu'**au moins un aimant permanent (148) s'étend sur plus de 60% de la longueur de la conduite d'entrée (140), de préférence de plus de 80%.

6. Dispositif selon l'une des revendications précédentes, **caractérisé en ce que** le système magnétique de purge comprend une source de courant (177) alimentant chaque bobine (176) et un module de commande (178) contrôlant la source de courant, de sorte que chaque bobine (176) génère un champ magnétique de sens opposé à l'aimant permanent (148) qui lui est associé.

7. Dispositif selon l'une des revendications précédentes, **caractérisé en ce qu'**il comporte une conduite de purge (180) comprenant une première extrémité (182) débouchant dans la zone supérieure (152) de la chambre de captation et une seconde extrémité (184) débouchant à l'extérieur du dispositif de captation (100), la conduite de purge (180) comprenant une vanne motorisée (186) de manière à permettre la purge de la zone supérieure (152) de la chambre de captation, la position de la vanne motorisée (186) étant contrôlée par le module de commande (174).

8. Dispositif selon la revendication précédente, **caractérisé en ce que** chaque conduite d'entrée (140) comprend des moyens de détection (174) de la quantité de boues ferriques accumulées dans la conduite, les moyens de détection étant connectés au module de commande (178).

9. Dispositif selon la revendication précédente, **caractérisé en ce que** les moyens de détection comprennent un capteur de champ magnétique (174) situé à proximité ou dans la conduite d'entrée (140), le capteur étant adapté pour mesurer la variation de l'intensité du champ magnétique dans la conduite.

10. Dispositif selon l'une des revendications précédentes, **caractérisé en ce que** les conduites d'entrées (140) sont au moins partiellement présentes dans la chambre de captation (120).

11. Dispositif selon l'une des revendications précédentes, **caractérisé en ce qu'**il comprend au moins quatre conduites d'entrées (140), de préférence au moins 8.

12. Dispositif selon la revendication précédente, **caractérisé en ce que** les conduites d'entrées (140) entourent la conduite de sortie (160).

13. Dispositif selon l'une des revendications 11 à 13, **caractérisé en ce que** les conduites d'entrée (140) et/ou la conduite de sortie (160) sont parallèles ou sensiblement parallèles à la paroi latérale (126) de la chambre de captation (120).

14. Procédé de purge d'un dispositif de captation (100) de boues ferriques selon l'une des revendications 9 à 14, **caractérisé en ce que** lorsque les moyens de détection (173) détectent dans une conduite d'entrée (140) une quantité de boues ferriques accumulées dépassant un seuil prédéterminé, le module de commande (178) :
- actionne la source de courant (177) alimentant la bobine (176) présente au niveau de la conduite d'entrée (140) avec un courant apte à diminuer, de préférence à annuler, le champ magnétique généré par l'aimant permanent présent au niveau de ladite conduite ; puis
- ouvre la vanne motorisée (186).
